Europäisches Patentamt

European Patent Office

Office européen des brevets

(19)

(11) Veröffentlichungsnummer : **0 343 677 B1**

(12) **EUROPÄISCHE PATENTSCHRIFT**

(45) Veröffentlichungstag der Patentschrift :
18.12.91 Patentblatt 91/51

(51) Int. Cl.⁵ : **F16L 21/02**

(21) Anmeldenummer : 89109507.7

(22) Anmeldetag : 26.05.89

(54) **Abdichtung zwischen zwei ineinandersteckbaren Betonfertigteilen.**

(30) Priorität : 27.05.88 DE 8806952 U

(43) Veröffentlichungstag der Anmeldung :
29.11.89 Patentblatt 89/48

(45) Bekanntmachung des Hinweises auf die
Patenterteilung :
18.12.91 Patentblatt 91/51

(84) Benannte Vertragsstaaten :
AT BE DE ES FR GB IT NL SE

(56) Entgegenhaltungen :
EP-A- 0 011 919
EP-A- 0 212 763
DE-A- 1 475 581

(56) Entgegenhaltungen :
DE-A- 2 714 274
DE-A- 2 900 437
DE-B- 1 270 344
US-A- 2 537 659

(73) Patentinhaber : PT-Poly-Tec GmbH Vertrieb
und Herstellung von Dichtungssystemen
Dieselstrasse 7
W-6450 Hanau (DE)

(72) Erfinder : Preisendörfer, Gerhard
Theodor-Heuss-Strasse 13
W-6056 Heusenstamm (DE)

(74) Vertreter : Blumbach Weser Bergen Kramer
Zwirner Hoffmann Patentanwälte
Sonnenberger Strasse 100
W-6200 Wiesbaden 1 (DE)

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine Abdichtung an zwei ineinandersteckbaren Betonfertigteilen mit unterschiedlichen Durchmessern im Eingriffsbereich sowie auf ein Verfahren zur Herstellung einer derartigen Abdichtung und zu deren Zusammenbau.

Ineinandersteckbare Betonfertigteile, beispielsweise Betonrohre nach DIN 4032 und 4035, werden im allgemeinen mit Dichtungen aus Elastomeren abgedichtet, welche als Rollringe oder als Gleitdichtungen ausgebildet sein können. Bei letzteren ist es bekannt DE-A-2900437, einen Dichtring zum Abdichten des Zwischenraums zwischen zwei im wesentlichen konzentrischen Dichtoberflächen zu verwenden, der aus zwei Dichtabschnitten besteht, von denen jeder eine Gleitoberfläche hat, wobei die Dichtabschnitte sich an den Gleitoberflächen berühren und so ausgebildet sind, daß sie beim Einführen des einen der Dichtoberflächen die andere Dichtoberfläche im wesentlichen am gleichen Ort bleiben, an einer Dichtoberfläche anliegen und aneinander entlang den Gleitoberflächen gleiten. Der Dichtring kann mit einem Schmier- oder Gleitmittel versehen sein. Nachteilig an dieser bekannten Ausführungsform des Dichtrings ist der Umstand, daß das Gleitmittel mit der Zeit austrocknen oder verhärten kann, womit der Dichtring nicht mehr wirkungsvoll auf dem zugeordneten Betonfertigteil gleiten kann. Nachteilig ist ferner, daß die Dichtung am Spitzende des Betonfertigteils angebracht ist, weil der sich im Inneren einer Rohrstrecke aufbauende Druck die Dichtung niederzudrücken und damit außer Berührung mit dem muffenartigen Ende zu bewegen trachtet.

Bei einer weiteren, am Spitzende anzubringenden Dichtung (EP-A-0011919) ist ein geschlossener Mantel auf der Dichtung vorgesehen, der beim Zusammenfügen der Betonteile von der Muffe mitgezogen wird. Auch hier besteht die Gefahr der Undichtigkeit, wenn der Innendruck in einem verlegten Rohrstrang größer wird als der Anpreßdruck der Dichtung.

Aus EP-A-0212763 ist eine im Querschnitt Z-förmige Dichtung bekannt, die auch in der Muffe angeordnet sein kann und einen Gleitmantel aufweist, der vom Spitzende erfaßt und über die Dichtung gezogen werden soll. Einerseits muß der Gleitmantel eine gewisse Steifigkeit haben, um nicht mit dem vorderen Ende in den Raum vor dem eintretenden Spitzende hineinzuhängen, andererseits aber ausreichende Biegsamkeit aufweisen, um mit einem Bauch in diesen Raum vor dem eintretenden Spitzende einzutauchen. Wie dieser Kompromiß erzielt werden kann, ist in der Praxis nicht bekannt geworden. Es ist auch eine Ausführungsform mit einer Kompressionsdichtung dargestellt, die in komprimiertem Zustand in eine Gießform eingebracht wird, welche mit Beton gefüllt wird, so daß die Kompressionsdichtung nach Erhärten des Betons und Entfernen der Gießform radial nach innen wächst, so daß der an der Dichtung angeformte Gleitmantel vom Beton weggezogen wird. Beim Zusammenbau mit dem Spitzende treten die gleichen Probleme wie zuvor beschrieben auf.

Bei verlegten Betonfertigteilen, insbesondere Rohrleitungen, kommen Relativverschiebungen der Teile untereinander vor, insbesondere wegen Setzungen, wie sie in Bergbaugebieten gehäuft vorkommen. Bei den bisher bekannten Abdichtungen ist die Funktionsfähigkeit nach einigen Jahren des Einbaus beeinträchtigt, wenn es zu solchen Relativverschiebungen der Betonfertigteile gegeneinander kommt.

Der Erfindung liegt die Aufgabe zugrunde, eine Abdichtung an Betonfertigteile zu schaffen, die auch nach Jahren zuverlässig ihre Dichtfunktion ausübt, auch wenn es zu Relativverschiebungen der Betonfertigteile zueinander kommt.

Die gestellte Aufgabe wird durch die Merkmale des Anspruchs 1 oder 3 gelöst.

In der bevorzugten Ausführungsform besteht die Auskleidung aus einem Schlauch mit eingefülltem Gleitmittel. Das Gleitmittel ist im Schlauch gegen Austrocknen und Verhärten geschützt. Bemerkenswert ist auch die Tatsache, daß die Dichtung und das Gleitmittel voneinander getrennt sind.

Weitere Einzelheiten der Erfindung werden anhand der Zeichnung beschrieben. Dabei zeigt :

Fig. 1     einen Querschnitt durch einen Rohrstrang im Bereich der ersten Ausführungsform der Abdichtung,
Fig. 2     eine vergrößerte Einzelheit, nämlich einen mit Schmiermittel gefüllten Gummischlauch,
Fig. 3     die Herstellung eines Betonrohrs mit einer zweiten Ausführungsform der Abdichtung,
Fig. 4     den Zusammenbau zweier Betonrohre und
Fig. 5     die Abdichtung im wirksamen Zustand.

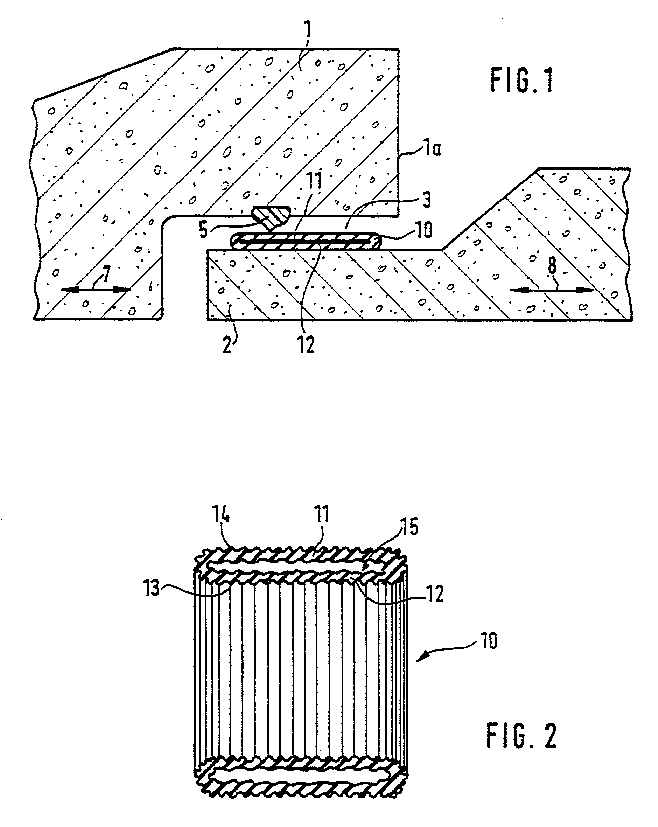

In Fig. 1 sind das Glockenmuffenende 1 und das Spitzende 2 zweier benachbarter, ineinandergesteckter Betonrohre dargestellt, die durch einen Ringspalt 3 voneinander getrennt sind. Im Bereich dieses Ringspaltes ist am Glockenmuffenende 1 eine fest eingebaute Dichtung 5 vorgesehen, die als Kompressions- und/oder Lippendichtung ausgestaltet sein kann, wobei handelsübliche Dichtungen verwendet werden können. Auf das Spitzende 2 ist ein plattgedrückter Gummischlauch 10 aufgezogen, der das Spitzende 2 auskleidet. Um zu einer sicheren Überdeckung der Dichtung 5 mit dem Gummischlauch 10 zu gelangen, sollte die Breite des zusammengedrückten Schlauches 10 etwa zwei Drittel der Länge des Spitzendes 2 betragen. Der spaltförmige Innen-

2

raum des Schlauchs 10 ist mit einem Schmier- oder Gleitmittel 15 gefüllt, wie aus Fig. 2 ersichtlich. Am plattgedrückten Gummischlauch 10 können eine radial äußere Wandung 11 und eine radial innere Wandung 12 unterschieden werden, die infolge des Schmiermittels 15 leicht gegeneinander verschoben werden können, wobei natürlich Teile der äußeren Wand zur inneren Wand wandern und umgekehrt. Der Gummischlauch 10 kann auf der Außenseite mit Riffelungen 13 versehen sein, die in Umfangsrichtung, d.h. entlang des großen Durchmessers des Schlauchs, laufen. Es können auch Wellungen 14 auf der Innenseite des Schlauchs 10 vorgesehen sein, um das Aufeinanderkleben der Wände 11 und 12 zu vermeiden.

Das in den Schlauch 10 gefüllte Dichtmittel 15 weist eine relativ niedrige Viskosität auf, und die eingefüllte Menge ist gering, weil es nur darauf ankommt, daß die beiden Wände 11, 12 des Schlauchs gegeneinander gleiten können.

Wie sich aus Fig. 1 ergibt, berührt das radial innere Ende 6 der Dichtung 5 die Außenoberfläche der Wandung 11 des Gummischlauchs 10 und greift insbesondere zwischen den Riffelungen 13 ein. Wenn sich die Betonrohre im Sinne der Pfeile 7, 8 gegeneinander verschieben, so nimmt die Spitze 6 der Dichtung 5 die radial äußere Wandung 11 des Gummischlauchs 10 mit sich, so daß die Spitze 6 niemals entlang von rauhem Beton schabt. Da das Schmiermittel 15 gut eingeschlossen ist, unterliegt es nicht den Einflüssen des durch die Rohre fließenden oder geförderten Mediums, so daß die Gleitfähigkeit des Schmiermittels lange erhalten bleibt. Es ist deshalb zu erwarten, daß die Dichtfunktion der dargestellten Verbindung lange erhalten bleibt, auch wenn die beteiligten Betonrohre häufigen Verschiebungen unterliegen.

Während die dargestellte Anordnung des Gummischlauchs 10 am Spitzende 2 und der fest eingebauten Dichtung 5 am Glockenmuffenende 1 am einfachsten zu realisieren ist, ist auch die umgekehrte Anordnung mit Gummischlauch am Glockenmuffenende und Dichtung am Spitzende denkbar. In diesem Fall könnte man den Gummischlauch etwas über das Stirnende 1a der Glockenmuffe 1 herausragen lassen, wobei dann die am Spitzende angebrachte Dichtung den Gummischlauch in den Spalt 3 hineinzieht, wenn die Betonfertigteile ineinandergesteckt werden.

Außer Gummi als Material des Schlauchs 10 kommen auch andere Kunststoffe in Betracht, die nicht altern und mit Schmiermittel kompatibel sind. Das verwendete Material des Schlauchs 10 und insbesondere die Riffelungen 13 sollten außerdem eine gewisse Dehnfähigkeit haben, um in Lunkerstellen des Betons dichtend einzugreifen und auch die Rauhigkeiten des Betons auszugleichen. Dadurch wird verhindert, daß die Dichtwirkung gewissermaßen an der Schlauchunterseite unterlaufen werden kann.

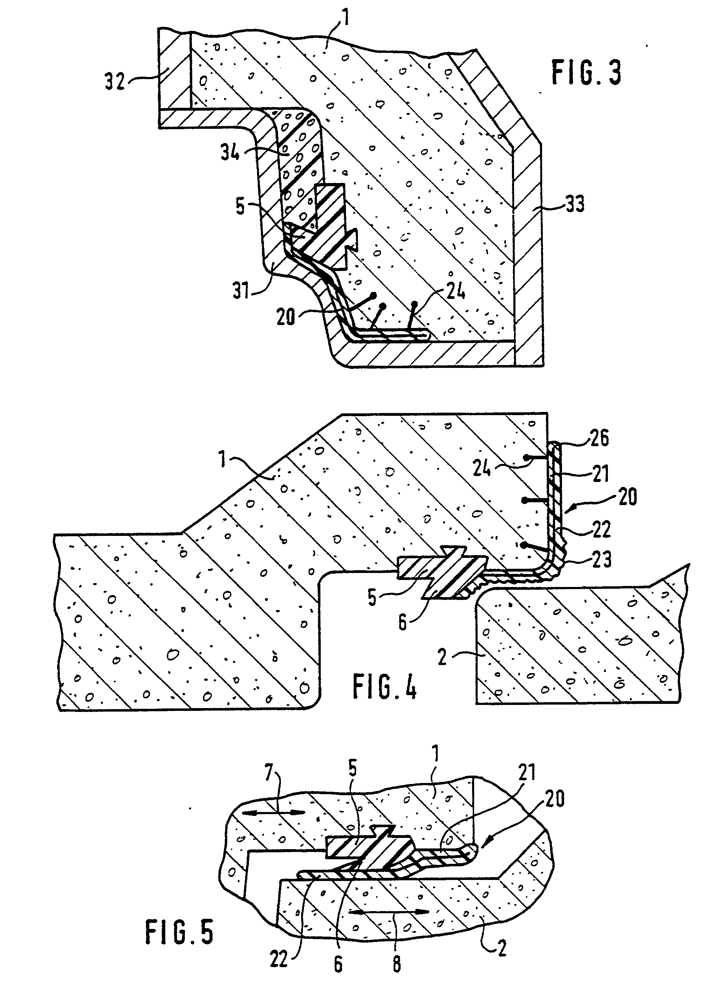

Fig. 3 bis 5 zeigen eine zweite Ausführungsform der Erfindung. Sich entsprechende Bauteile sind mit dem gleichen Bezugszeichen wie in der ersten Ausführungsform belegt. Statt des geschlossenen Gummischlauchs ist eine Folienfalte 20 benutzt, die aus einem Material besteht, welches außerordentlich leicht gegeneinander verschieblich ist. Die Folienfalte 20 weist (vom Bauteil 1 gesehen) ein inneres Folienteil 21 und ein äußeres Folienteil 22 auf. Am Folienteil 21 sind abreißbare Haltefortsätze 24 angebracht, um die Folienfalte am Glockenende 1 vorübergehend zu halten. Wie im Fall der Verwendung eines Gummischlauchs 10 kann die Außenseite der Folie 20 mit Riffelungen 23 versehen sein, welche den Mitnahmeeffekt durch das Spitzende 2 begünstigen.

Fig. 3 zeigt die Herstellung eines Betonrohrs am Glockenmuffenende 1 mit Hilfe einer Form, die aus einer ringförmigen Untermuffe 31 sowie aus einem inneren und äußeren Schalungsrohr 32 und 33 besteht. In die Untermuffe 31 werden die Folienfalte 20, die Dichtung 5 und ein Stützkörper 34 aus geschäumtem Kunststoff eingefügt, wonach die Form 31, 32, 33 mit Beton gefüllt wird. Die Fortsätze 24 der Folienfalte 20 werden von dem sich erhärtenden Beton umschlossen, so daß die Folienfalte 20 nicht von der hergestellten Betonmuffe 1 verloren geht, wenn die Form zerlegt wird. Der Stützkörper 34 bleibt normalerweise zum Schutz der Dichtung 5 in der Glockenmuffe 1 bis kurz vor deren Zusammenbau mit einem Spitzende 2, wie dies aus Fig. 4 und 5 hervorgeht.

Fig. 4 und 5 zeigen das Muffenende und das Spitzende der Betonrohre während des Zusammenbaus und im zusammengebauten Zustand, und zwar liegend, weil dies die gewöhnliche Art der Verwendung von Betonrohren ist. Wenn das Spitzende 2 in das Muffenende 1 hineingeschoben wird, trifft es auf den äußeren Folienteil 22 und zieht diesen infolge seiner Rauhigkeit mit, so daß das innere Folienteil 21 radial außen am Übergang 26 zum äußeren Folienteil ebenfalls mitgenommen wird und die Fortsätze 24 nacheinander abreißen. Die Folienfalte 20 wird so nach innen über die Dichtung 5 gezogen, und gleichzeitig wird eine ringförmige Auskleidung des Spitzendes 2 geschaffen, die dafür sorgt, daß die Spitze 6 der Dichtung 5 keinesfalls auf rauhem Beton des Spitzendes 2 schabt. Es wird deshalb eine lang andauernde, gute Abdichtung erzielt, auch wenn sich die beiden Betonrohre im Sinne der Pfeile 7 und 8 gegeneinander bewegen sollten.

Zur Erhöhung der Gleitfähigkeit zwischen den Folienteilen 21 und 22 kann Schmiermittel in die Folienfalte eingefüllt sein. Es ist auch möglich, mit einer einfachen Folie, die gewissermaßen nur aus dem Folienteil 21 besteht, auszukommen. Die Fortsätze 24 müssen in diesem Fall ausreichend schwach sein, damit sie beim Auftreffen des Spitzendes 2 auf der Folie und deren Mitnahme abreißen. Die Folie wird beim weiteren Verschieben des Spitzendes 2 mitgenommen, schiebt sich über die Dichtung 5 und bildet eine ringförmige Auskleidung auf dem Spitzende 2. Alternativ kann die einfache Folie auf das Spitzende 2 aufgeschrumpft werden. Auch in diesem Fall wird erreicht, daß die Spitze 6 der Dichtung niemals auf rauhem Boden schabt.

**Patentansprüche**

1. Abdichtung an zwei ineinandersteckbaren Betonfertigteilen mit unterschiedlichem Durchmesser im Eingriffsbereich, mit folgenden Merkmalen :
a) das erste Betonfertigteil weist ein muffenartiges Ende (1) und eine darin befestigte Kompressions- und-/oder Lippendichtung (5) auf ;
b) das zweite Betonfertigteil weist ein Spitzende (2) auf, auf das ein plattgedrückter, mit Schmiermittel (15) gefüllter Schlauch (10) gezogen ist, der eine Auskleidung des Spitzendes (2) bildet ;
c) im zusammengebauten Zustand der Betonfertigteile liegt die Dichtung (5) am Schlauch (10) an, und dieser ermöglicht eine Relativverschiebung (7, 8) der Betonfertigteile zueinander, indem die Schlauchwände (11, 12) aneinander gleiten.

2. Abdichtung nach Anspruch 1, dadurch gekennzeichnet, daß der Schlauch (10) unter Vorspannung auf das Spitzende (2) aufgezogen ist.

3. Abdichtung an zwei ineinandersteckbaren Betonfertigteilen mit unterschiedlichem Durchmesser im Eingriffsbereich, mit folgenden Merkmalen :
a) das erste Betonfertigteil weist ein muffenartiges Ende (1) und eine darin befestigte Kompressions- und-/oder Lippendichtung (5) auf ;
d) das zweite Betonfertigteil weist ein Spitzende (2) auf ;
e) auf der Dichtung (5) und dem angrenzenden muffenartigen Ende (1) des Betonfertigteils liegt eine bei der Dichtung offene Folienfalte (20), die einen inneren, am muffenartigen Ende (1) lösbar befestigten Folienteil (21) und einen äußeren, den inneren Folienteil abdeckenden Folienteil (22) aufweist ;
f) der äußere Folienteil (22) ist wenigstens teilweise im Eingriffsbereich des Spitzendes (2) angeordnet, so daß beim Zusammenstecken der Betonfertigteile der äußere Folienteil (22) vom Spitzende (2) mitgenommen und über die Dichtung (5) gezogen wird, wobei eine Auskleidung des Spitzendes (2) entsteht.

4. Abdichtung nach einem der Ansprüche 1 bis 3, dadurch gekennzeichnet, daß die Auskleidung (10, 20) auf ihrer Außenseite Riffelungen (13, 23) aufweist, die entlang des großen Durchmessers der Auskleidung laufen.

5. Abdichtung nach einem der Ansprüche 1 bis 4, dadurch gekennzeichnet, daß die axiale Erstreckung der Auskleidung (10, 20) etwa zwei Drittel der Länge des Spitzendes (2) entspricht.

6. Abdichtung nach einem der Ansprüche 1 bis 5, dadurch gekennzeichnet, daß die Betonfertigteile als Betonrohr mit Glockenmuffenende (1) und Spitzende (2) ausgebildet sind.

7. Abdichtung nach einem der Ansprüche 3 bis 6, dadurch gekennzeichnet, daß der innere Folienteil (21) mit Haltefortsätzen (24) am muffenartigen Ende (1) abreißbar befestigt ist.

8. Abdichtung nach einem der Ansprüche 3 bis 7, dadurch gekennzeichnet, daß hinter der Dichtung (5) ein erweiterter Raum für das Spitzende (2) vorgesehen ist, der durch Entfernen eines Stützkörpers (34) aus dem muffenartigen Ende (1) freigemacht worden ist.

9. Verfahren zur Herstellung einer Abdichtung nach Anspruch 7 oder 8 und deren Zusammenbau, gekennzeichnet durch folgende Maßnahmen :
g) zur Herstellung des muffenartiges Endes werden in eine Form (31, 32, 33) ein Stützkörper (34), eine Dichtung (5) und eine Folienfalte (20) mit Haltefortsätzen (24) eingelegt, und die Form wird mit Beton gefüllt ;
h) nach Erhärten des Betons wird die Form (31, 32, 33) zerlegt und das Betonfertigteil entnommen ;
i) die Schritte g) und h) werden wiederholt durchgeführt ;
j) nach Lieferung der Betonfertigteile an eine Baustelle wird der Stützkörper (34) entfernt ;
k) benachbarte Betonfertigteile werden mit ihrem muffenartigen Ende (1) und mit ihrem Spitzende (2) ineinandergeschoben, wobei das Spitzende (2) an die Folienfalte (20) anstößt und sie unter Abreißen der Haltefortsätze (24) nitnimmt, so daß das Spitzende (2) von Teilen (22) der Folie (20) ausgekleidet wird, während die Dichtung (5) auf diesem Auskleidungsteil gleitet.

**Claims**

1. A seal on two precast concrete parts which are adapted to be fitted one inside another and which have different diameters in the engagement zone, with the following features :

a) the first precast concrete part has an end (1) in the form of a socket and a compression and/or lip seal (5) fixed therein ;

b) the second precast concrete part has a spigot end (2) on to which is drawn a flattened tube (10) filled with lubricant (15) and forming a covering for the spigot end (2) ;

c) in the assembled state of the precast concrete parts the seal (5) bears against the tube (10), and this allows a relative displacement (7, 8) of the precast concrete parts in relation to one another, the tube walls (11, 12) sliding on one another.

2. A seal according to claim 1, characterised in that the tube (10) is pulled on to the spigot end (2) with prestressing.

3. A seal on two precast concrete parts which are adapted to be fitted one inside another and which have different diameters in the engagement zone, with the following features :

a) the first precast concrete part has an end (1) in the form of a socket and a compression and/or lip seal (5) fixed therein ;

d) the second precast concrete part has a spigot end (2) ;

e) on the seal (5) and the adjoining socket end (1) of the precast concrete part there lies a folded foil, film or sheeting (20) which is open at the seal end which comprises an inner part (21) releasably secured to the socket end (1), and an outer part (22) covering the inner part ;

f) the outer foil, film or sheeting part (22) is at least partially disposed in the engagement zone of the spigot end (2) so that when the precast concrete parts are fitted together the outer foil, film or sheeting part (22) is entrained by the spigot end (2) and is pulled over the seal (5), a covering being formed for the spigot end (2).

4. A seal according to any one of claims 1 to 3, characterised in that the covering (10, 20) has fluting (13, 23) or its outside, such fluting extending along the major diameter of the covering.

5. A seal according to any one of claims 1 to 4, characterised in that the axial extension of the covering (10, 20) is equivalent to approximately two-thirds of the length of the spigot end (2).

6. A seal according to any one of claims 1 to 5, characterised in that the precast concrete parts are constructed as a concrete pipe having a socket end (1) and a spigot end (2).

7. A seal according to any one of claims 3 to 6, characterised in that the inner foil, film or sheeting part (21) is secured to the socket end (1) by means of holding projections (24) as as to be adapted to tear off.

8. A seal according to any one of claims 3 to 7, characterised in that a widened space for the spigot end (2) is provided behind the seal (5) and is exposed by removing a support member (34) from the socket end (1).

9. A method of making a seal according to claim 7 or 8 and its assembly, characterised by the following steps :

g) to make the socket end, a support member (34), a seal (5) and a folded foil, film or sheeting (20) with holding projections (24) are placed in a mould (31, 32, 33) and the mould is filled with concrete ;

h) after the concrete has set the mould (31, 32, 33) is dismantled and the precast concrete part removed;

i) the steps g) and h) are carried out repeatedly ;

j) after the precast concrete parts have been delivered to a building site the support element (34) is removed ;

k) adjoining precast concrete parts are fitted one inside the other by their socket end (1) and their spigot end (2), the spigot end (2) meeting the folded foil, film or sheeting (20) and entraining it, the holding projections (24) being torn off, so that the spigot end (2) is covered by parts (22) of the foil, film or sheeting (20) while the seal (5) slides on this covering part.

## Revendications

1. Joint d'étanchéité, pour deux éléments préfabriqués en béton insérables l'un dans l'autre possédant dans la zone d'insertion des diamètres différents, comportant les caractéristiques suivantes :

a) le premier élément préfabriqué en béton présente une extrémité en manchon (1) et, qui y est fixé, un joint d'étanchéité de compression et/ou à lèvres (5) ;

b) le deuxième élément préfabriqué en béton présente une extrémité en pointe (2), sur laquelle est placé, rempli de lubrifiant (15), un tuyau flexible (10), lequel constitue un revêtement pour l'extrémité en pointe (2) ;

c) à l'état assemblé des deux éléments préfabriqués en béton, le joint d'étanchéité (5) est contre le tuyau flexible (10) et celui-ci permet un déplacement relatif (7, 8) des éléments préfabriqués en béton l'un par rapport à l'autre, les parois (11, 12) du tuyau flexible glissant l'une sur l'autre.

2. Joint d'étanchéité selon la revendication 1, caractérisé en ce que le tuyau flexible (10) est mis en place sous précontrainte sur l'extrémité en pointe (2).

3. Joint d'étanchéité, pour deux éléments préfabriqués en béton insérable l'un dans l'autre possédant dans la zone d'insertion des diamètres différents, comportant les caractéristiques suivantes :

a) le premier élément préfabriqué en béton présente une extrémité en manchon (1) et, qui y est fixé, un joint d' étanchéité (5) de compression et/ou à lèvres ;

d) le deuxième élément préfabriqué en béton présente une extrémité en pointe (2) ;

e) sur le joint d'étanchéité (5) et l'extrémité en manchon (1) contiguë de l'élément préfabriqué en béton, est posée une feuille repliée (20) ouverte au joint d'étanchéité, qui présente une partie interne de feuille (21) fixée de manière amovible sur l'extrémité en manchon (1) et une partie externe de feuille (22) recouvrant la partie interne de feuille ;

f) la partie externe de feuille (22) est, partiellement au moins, placée dans la zone d'insertion de l'extrémité en pointe (2), de sorte que, lors de l'emboîtement des éléments préfabriqués en béton, la partie externe de feuille (22) est entraînée par l'extrémité en pointe (2) et est tirée par-dessus le joint d'étanchéité (5), un revêtement de l'extrémité en pointe (2) en résultant.

4. Joint d'étanchéité selon l'une des revendications 1 à 3, caractérisé en ce que le revêtement (10, 20) présente, sur sa face extérieure, des cannelures (13, 23), qui se situent le long du grand diamètre du revêtement.

5. Joint d'étanchéité selon l'une des revendications 1 à 4, caractérisé en ce que la portée axiale du revêtement (10, 20) correspond sensiblement aux deux tiers de la longueur de l'extrémité en pointe (2).

6. Joint d'étanchéité selon l'une des revendications 1 à 5, caractérisé en ce que les éléments préfabriqués en béton sont configurés comme un tuyau en béton comportant une extrémité en manchon en cloche (1) et une extrémité en pointe (2).

7. Joint d'étanchéité selon l'une des revendications 3 à 6, caractérisé en ce que la partie interne de feuille (21) est fixée par des prolongements de retenue (24) arrachables sur l'extrémité en manchon (1).

8. Joint d'étanchéité selon l'une des revendications 3 à 7, caractérisé en ce que derrière le joint d'étanchéité (5) est prévu un espace élargi pour l'extrémité en pointe (2), lequel a été libéré par enlèvement d'un corps support (34) hors de l'extrémité en manchon (1).

9. Procédé pour la fabrication et l'assemblage d'un joint selon la revendication 7 ou 8 caractérisé par les mesures suivantes :

g) pour la fabrication de l'extrémité en manchon sont placés dans une forme (31, 32, 33) un corps support (34), un joint d'étanchéité (5) et une feuille repliée (20) comportant des prolongements de retenue (24), après quoi la forme est remplie de béton ;

h) après durcissement du béton, la forme (31, 32, 33) est désassemblée et l'élément préfabriqué en béton enlevé ;

i) les étapes g) et h) sont répétées à plusieurs reprises ;

j) après livraison des éléments préfabriqués en béton sur un chantier de construction, le corps support (34) est enlevé ;

k) des éléments préfabriqués en béton voisins sont poussés l'un dans l'autre avec leur extrémité en manchon (1) et leur extrémité en pointe (2), celle-ci bute contre la feuille repliée (20) et l'entraîne avec arrachement des prolongements de retenue (24), si bien que l'extrémité en pointe (2) est revêtue des parties (22) de la feuille (20), tandis que le joint d'étanchéité (5) glisse sur cette partie de revêtement.

FIG.1

FIG. 2

FIG. 3

FIG. 4

FIG. 5